Europäisches Patentamt

European Patent Office

Office européen des brevets

(11) Publication number: **0 148 370**
**B1**

(12) **EUROPEAN PATENT SPECIFICATION**

(45) Date of publication of patent specification: **09.03.88**

(21) Application number: **84113696.3**

(22) Date of filing: **13.11.84**

(51) Int. Cl.⁴: **H 02 H 9/04**

(54) Fail-safe circuit for electronic circuit in automotive vehicle.

(30) Priority: **16.12.83 JP 236240/83**

(43) Date of publication of application:
**17.07.85 Bulletin 85/29**

(45) Publication of the grant of the patent:
**09.03.88 Bulletin 88/10**

(84) Designated Contracting States:
**DE FR GB**

(56) References cited:

**ELEKTRONIK, vol. 28, no. 26, December 1979, München; D. BERGMANN "Integrierte Überspannungs-Schutzschaltung", pages 66-68**

**ELEKTRONIK, vol. 30, no. 22, 1981, München; CH. DESAI et al. "Über- und Unterspannungs-Überwachungsschaltungen", pages 57-52**

(73) Proprietor: **NISSAN MOTOR CO., LTD.**
No.2, Takara-cho, Kanagawa-ku
Yokohama-shi Kanagawa-ken 221 (JP)

(72) Inventor: **Matsuda, Toshiro**
15-1-207, Higashirinkan 1-chome
Sagamihara-shi Kanagawa-ken (JP)

(74) Representative: **Patentanwälte Grünecker, Dr. Kinkeldey, Dr. Stockmair, Dr. Schumann, Jakob, Dr. Bezold, Meister, Hilgers, Dr. Meyer-Plath**
Maximilianstrasse 58
D-8000 München 22 (DE)

Courier Press, Leamington Spa, England.

EP 0 148 370 B1

## Description

The present invention relates to a fail-safe circuit for an electronic circuit comprising a power source generating a current at a variable voltage, a voltage regulator for adjusting the power source voltage to a constant power supply voltage and outputting the same to said electronic circuit, a fuse inserted between the power source and the voltage regulator and rated to blow when subjected to the inimpeded power source current, a normally-open shorting circuit connecting said power source directly to ground at a low impedance through said fuse when closed, and a detector circuit comparing the power source voltage to a reference voltage to detect when the power source voltage exceeds the reference voltage, said detector circuit being operable for closing said shorting circuit when the power source voltage exceeds the reference voltage.

In recent years, various electronic circuits have been employed in automotive vehicles for controlling vehicle devices such as the engine, the brake system and the suspension system and for providing various information such as driving distance, driving time, remaining fuel supply, vehicle range with the remaining fuel, etc. Such electronic circuits receive power supply from a vehicle battery.

If the regulator in an alternator is damaged or when two batteries are connected in series for better cold start characteristics in cold areas, it is possible for the output voltage of the battery to become abnormally high, even far above its rated voltage. If such abnormally high voltage is applied to the electronic circuit for a long period of time, IC's in the circuits may be damaged. In some cases, the fuse in the power supply circuit will not blow even when the power supply voltage is abnormally high.

Fail-safe circuits for the protection of electronic circuits against abnormally high power supply voltages are known (Elektronik, vol. 30, no. 22, 1981, München; CH.DESAI et al. "Über- und Unterspannungs-Überwachungsschaltungen", pages 57 to 62) in which the reference voltage to be compared with the power source voltage is generated by a particular reference voltage source outputting said reference voltage with a fixed level.

It is the object of the invention to improve a fail-safe circuit as indicated in the precharacterising part of claim 1 such that besides protection of an electronic circuit against abnormally high power supply voltage monitoring of voltage regulator performance is possible.

In order to accomplish the above-mentioned object, in a fail-safe circuit, according to the present invention, said detector circuit is connected to said voltage regulator for receiving said constant power supply voltage to derive said reference voltage therefrom.

By means of this particular circuit connection, abnormality of the power supply with respect to the regulated voltage can be precisely and accurately detected. That means the electronic circuit is not only protected against abnormally high power supply but also the performance of the voltage regulator is monitored. For example, if the regulated voltage should drop due to a malfunction within the voltage regulator, the fail-safe circuit interrupts power supply to the electronic circuit which may otherwise cause errors in controlling an engine or other systems of a vehicle.

Further developments of the invention are claimed in subclaims 2 and 3.

The present invention will be understood from the detailed description given herebelow and from the accompanying drawings of the preferred embodiments of the present invention which, however, should not be taken to limit the invention to the specific embodiments but are for explanation and understanding only:

In the drawings:

Fig. 1 is a circuit diagram of the first embodiment of a fail-safe circuit according to the present invention; and

Fig. 2 is a circuit diagram of the second embodiment of a fail-safe circuit according to the invention.

## Description of the preferred embodiment

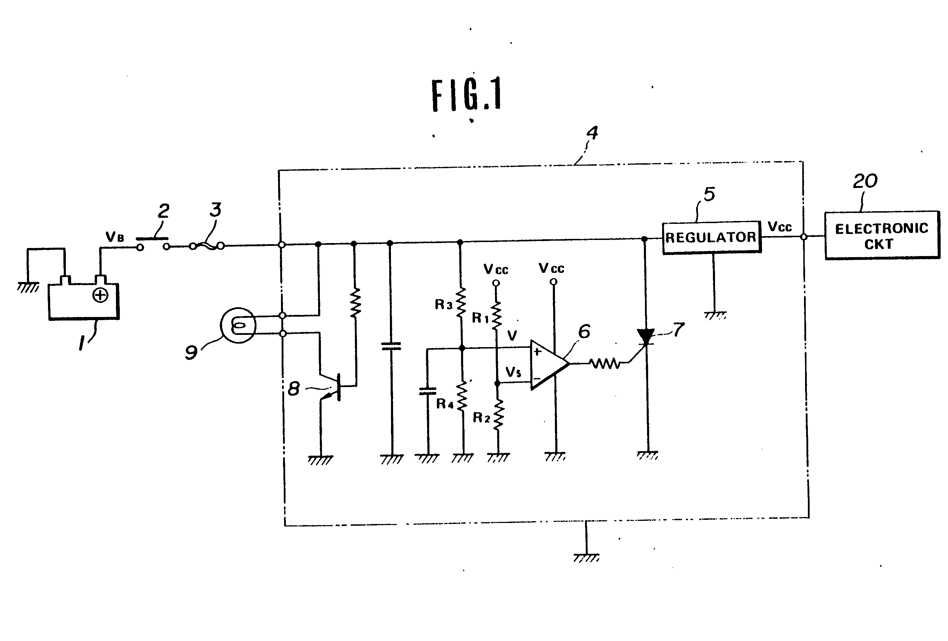

Referring now to the drawings, particularly to Fig. 1, the first embodiment of a fail-safe circuit 4 is generally connected between a vehicle battery 1 serving as a power source and an electronic circuit 20. The battery 1 is connected to the fail-safe circuit 4 by way of an ignition switch 2 and a fuse 3. The fail-safe circuit 4 includes a three-terminal voltage regulator 5 which regulates the battery voltage $V_B$ to a constant voltage Vcc and distributes the resulting voltage as the power supply voltage. The electronic circuit 20 receives the constant voltage Vcc from the regulator 5.

An operational amplifier 6 is included in the fail-safe circuit 4. The negative input terminal of the operational amplifier 6 receives the constant voltage Vcc divided by a voltage divider comprising resistors R1 and R2. This divided voltage at the negative input terminal serves as a reference voltage to be compared with the input voltage of the operational amplifier 6. The input voltage applied to the positive input terminal of the operational amplifier 6 is the battery voltage $V_B$ divided by a voltage divider comprising resistors R3 and R4.

The fail-safe circuit 4 also includes a switching transistor 8. The base electrode of the transistor 8 is connected to the battery to receive the battery voltage $V_B$. The collector electrode of the transistor is connected to a monitor lamp 9 which is in turn, connected to the battery. The transistor thus conducts power through the monitor lamp 9 as long as the battery voltage is applied to its base electrode.

The output terminal of the operational amplifier 6 is connected to the gate of a thyristor 7. The anode of the thyristor 7 is connected to the battery and the cathode thereof is grounded. The circuit connecting the battery to ground through the thyristor 7 serves as a shorting circuit which closes during fail-safe operation.

In this arrangement, the resistance of the resistor R4 is selected to be smaller than that of the resistor R3 so that the voltage V applied to the positive input terminal of the operational amplifier will never be excessively high.

In operation, closing the ignition switch 2 initiates power supply. The battery voltage is applied to the base electrode of the transistor 8 to render it conductive. As a result, the monitor lamp 9 turns on. Therefore, as long as the battery is connected to the fail-safe circuit 4 through the fuse 3 and the ignition switch 2 is closed, the monitor lamp 9 is lit.

As the same time, the battery voltage is applied to the positive input terminal of the operational amplifier 6 after being divided by the dividing resistors R3 and R4. The negative input terminal receives the reference voltage Vs which is the regulated voltage Vcc from the regulator 5 divided by the dividing resistors R1 and R2. The reference voltage Vs is selected to be greater than the divided battery voltage at the positive input terminal when the battery voltage falls within a normal range.

As a result, the output at the output terminal of the operational amplifier 6 normally remains low. Therefore, the thyristor 7 is held nonconductive so that the battery is not shorted to ground therethrough.

When an abnormally high battery voltage is applied to the positive input terminal of the operational amplifier, the output level of the operational amplifier goes high. This renders the thyristor conductive, whereby the battery is connected directly to ground. As a result, a large current flows from the battery to ground through the fuse 3. This current will be sufficient to blow the fuse 3. Thus, power supply to the electronic circuit 20 through the fail-safe circuit 4 is interrupted.

At this time, the monitor lamp turns off due to the loss of power supply thereto. Therefore, the driver can recognize when the fuse 3 is blown by observing the monitor lamp.

As set forth above, the shown embodiment ensures interruption of the power supply to the electronic circuit when an abnormally high voltage of power supply is detected. This protects the electronic circuit from damage due to abnormally high voltages.

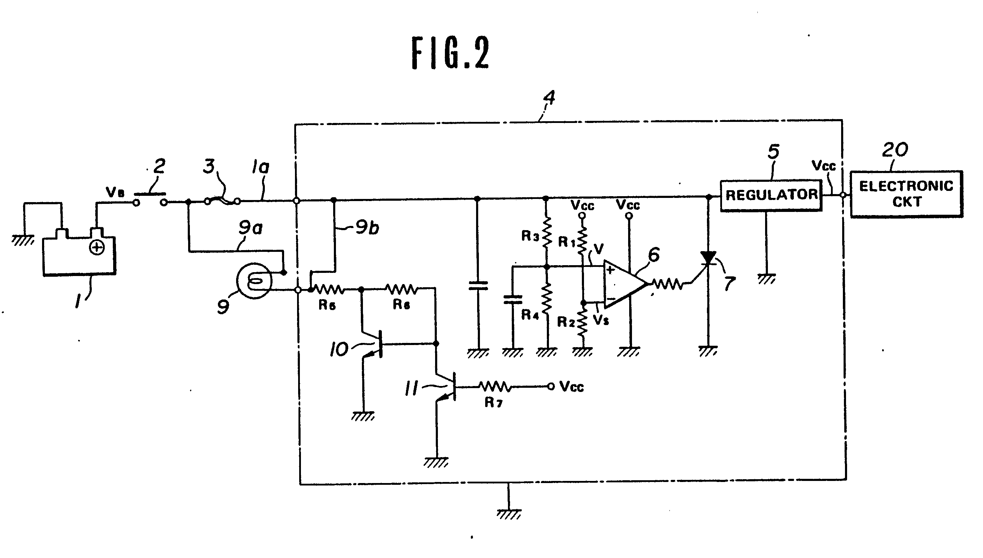

Fig. 2 is the second embodiment of the fail-safe circuit according to the present invention. In this embodiment, the arrangement for detecting abnormally high voltages and shorting the battery to ground is substantially the same as in the first embodiment. The characteristic trait of this embodiment is that the monitor lamp 9 is illuminated only after the fuse 3 has blown. Therefore, in this embodiment, the monitor lamp 9 works as a power-interruption alarm.

This operation can be done by using transistors 10 and 11 in place of the single transistor 8. The base electrode of the transistor 11 is connected to the regulator 5 to receive the regulated voltage through a resistor R7. The collector electrode of the transistor 11 is connected to the base electrode of transistor 10 and to the battery through the monitor lamp 9, and resistors R5 and R6. The collector electrode of the transistor 10 is connected to the battery by way of the monitor lamp 9 and resistor R5. As will be appreciated from Fig. 2, the monitor lamp 9 is connected to the battery 1 via two separate lead wires 9a and 9b. The lead wire 9a is connected to the power supply line 1a upstream of the fuse 3. On the other hand, the lead wire 9b is connected to the power supply line 1a downstream of the fuse 3. It should be noted that the resistance of the resistor R6 is substantially higher than that of the resistor R5.

As long as the power supply voltage remains in its normal range, the transistor 11 remains conductive due to the high-level input from the regulator 5 at its base electrode. As long as the transistor 11 is conductive, the potential at the base electrode of the transistor 10 remains low, rendering the transistor 10 nonconductive. Thus, the monitor lamp 9 also remains off.

When the fuse 3 blows, the potential at the base electrode of the transistor 11 goes low due to failure of power supply from the battery to the regulator 5. As a result, the potential at the base electrode of the transistor 10 goes high, closing the transistor on and illuminating monitor lamp 9.

With the arrangement set forth above, power supply break-down can be recognized by observing the monitor lamp.

As will be clear to those skilled in the art, the comparison between the battery voltage and the regulated reference voltage also serves to monitor voltage regulator performance. That is, the regulated voltage Vcc should drop, the operational amplifier output will go high just as it does if the battery voltage should abruptly increase.

As set forth above, the fail-safe circuit according to the present invention satisfactorily protects the electronic circuit from abnormally high battery voltages which may otherwise cause errors or, in the worst case, damage the IC's in the electronic circuit. Therefore, the invention fulfills all of the objects and advantages sought therefor.

**Claims**

1. A fail-safe circuit for an electronic circuit (20) comprising a power source (1) generating a current at a variable voltage (Vb), a voltage regulator (5) for adjusting the power source voltage (Vb) to a constant power supply voltage (Vcc) and outputting the same to said electronic circuit (20), a fuse (3) inserted between the power source (1) and the voltage regulator (5) and rated to blow when subjected to the unimpeded power source current, a normally-open shorting circuit (7) connecting said power source (1) directly to ground at a low impedance through said fuse (3) when closed, and a detector circuit (R1, R2, R3, R4, 6) comparing the power source voltage (Vb) to a reference voltage (Vs) to detect when the power source voltage (Vb) exceeds the reference voltage (Vs), said detector circuit (R1—R4, 6) being operable for closing said shorting circuit (7) when the power source voltage (Vb) exceeds the reference voltage (Vs), characterized in that said detector circuit (R1—R4, 6) is connected to said voltage regulator (5) for receiving said constant power supply voltage (Vcc) to derive said reference voltage (Vs) therefrom.

2. The fail-safe circuit as set forth in claim 1, which further comprises a monitor lamp (9) which remains on as long as the fuse (3) is intact and is turned off when the fuse (3) blows.

3. The fail-safe circuit as set forth in claim 1, which further comprises a monitor lamp (9) illuminated after said fuse (3) blows.

## Patentansprüche

1. Ausfallsichere Schaltung für eine elektronische Schaltung (20), die eine einen Strom bei änderbarer Spannung $(V_B)$ erzeugende Speisequelle (1), einen Spannungsregler (5) zum Einstellen der Speisequellen-Spannung $(V_B)$ auf eine konstante Speisespannung $(V_{cc})$ und Abgeben dieser an die elektronische Schaltung (20), eine zwischen die Speisequelle (1) und den Spannungsregler (5) einsetzbare Sicherung (3) solcher Größe, daß sie durchbrennt, wenn sie einem nicht angepaßten Speisequellen-Strom ausgesetzt wird, eine im Ruhezustand offene Kurzschlußschaltung (7), die die Speisequelle (1) mit niedriger Impedanz über die Sicherung (3) unmittelbar mit Erde verbindet, wenn sie geschlossen ist, und eine Detektorschaltung $(R_1, R_2, R_3, R_4, 6)$ aufweist, die die Speisequellen-Spannung $(V_b)$ mit einer Bezugsspannung $(V_S)$ vergleicht, um festzustellen, wenn die Speisequellen-Spannung $(V_B)$ die Bezugsspannung $(V_S)$ übersteigt, wobei die Detektorschaltung $(R_1$ bis $R_4, 6)$ die Kurzschlußschaltung (7) schließt, wenn die Speisequellen-Spannung $(V_B)$ die Bezugsspannung $(V_S)$ übersteigt, dadurch gekennzeichnet, daß die Detektorschaltung $(R_1$ bis $R_4, 6)$ mit dem Spannungsregler (5) verbunden ist, um die konstante Speisespannung $(V_{cc})$ zum Ableiten der Bezugsspannung $(V_S)$ aus dieser zu erhalten.

2. Ausfallsichere Schaltung nach Anspruch 1, die außerdem eine Überwachungslampe (9) aufweist, die aufleuchtet, solange die Sicherung (3) intakt ist, und abgeschaltet wird, wenn die Sicherung (3) durchbrennt.

3. Ausfallsichere Schaltung nach Anspruch 1, die außerdem eine Überwachungslampe (9) aufweist, die aufleuchtet, nachdem die Sicherung (3) durchgebrannt ist.

## Revendications

1. Un circuit à sûreté intégrée pour un circuit électrique (20) comprenant une source d'alimentation (1) produisant un courant à une tension variable (VB), un régulateur de tension (5) pour régler la tension d'alimentation (VB) à une tension d'alimentation constante (Vcc) et produire celle-ci audit circuit électrique (20), un fusible (3) inséré entre la source d'alimentation (1) et le régulateur de tension (5) et calibré pour fondre lorsque soumis à un courant de source libre, un circuit (7) de court-circuit normalement ouvert reliant ladite source d'alimentation (1) directement à la masse à une impédance faible à travers ledit fusible (3) lorsque fermé, et un circuit détecteur (R1, R2, R3, R4, 6) comparant la tension d'alimentation (VB) à une tension de référence (Vs) pour détecter l'instant où la tension d'alimentation (VB) excède la tension de référence (Vs), ledit circuit détecteur (R1—R4, 6) étant utilisable pour fermer le circuit (7) de court-circuit lorsque la tension d'alimentation (VB) excède la tension de référence (Vs), caracterise en ce que le circuit détecteur (R1—R4, 6) est relié audit régulateur de tension (5) pour recevoir la tension d'alimentation constante (Vcc) pour dériver ladite tension de référence (Vs) de celui-ci.

2. Le circuit à sûreté intégrée selon la revendication 1, qui comprend de plus une lampe de contrôle (9) qui reste allumée aussi longtemps que le fusible (3) est intacte et est éteinte lorsque le fusible (3) fond.

3. Le circuit à sûreté intégrée selon la revendication 1, qui comprend de plus une lampe de contrôle (9) illuminée après que le fusible (3) fond.

# FIG.1

0 148 370

# FIG.2

0 148 370